# EUROPEAN PATENT APPLICATION

(11) **EP 4 811 606 A1**
(43) Date of publication of application: **23.09.2026**
(21) Application number: 24891382.4
(22) Date of filing: 11.11.2024
(51) Int. Cl.: H02J 50/70, H02J 50/12, H02J 50/60

(54) **NOTIFICATION DEVICE, NON-CONTACT POWER SUPPLY SYSTEM, COMPUTER PROGRAM, POWER TRANSMISSION DEVICE, AND POWER RECEPTION DEVICE**

(30) Priority: 17.11.2023 JP 2023196082
(71) Applicant: DENSO CORPORATION, Kariya-city, Aichi 448-8661 (JP)
(72) Inventor: OBAYASHI Kazuyoshi, Kariya-city, Aichi 448-8661 (JP); TAKAHASHI Eisuke, Kariya-city, Aichi 448-8661 (JP)
(74) Representative: TBK
(86) International application number: PCT/JP2024/040003
(87) International publication number: WO 2025/105346

(57) **Abstract**

A notification device (300) is for a wireless power supply system (1000). The wireless power supply system includes a power receiving device (200) and at least one power transmission device (100) that transmits power wirelessly to the power receiving device. The notification device includes: an output unit notification unit (320) configured to output a power suppressing request signal requesting power suppression during the power transmission by the power transmission device, and a power supply (310, 310A) configured to supply power for an operation of the notification unit.

## Description

### [CROSS-REFERENCE TO RELATED APPLICATIONS]

This application is based on and claims the benefit of priority from Japanese Application No. 2023-196082 filed on November 17, 2023. The contents of this application are incorporated herein by reference in their entirety.

### [TECHNICAL FIELD]

The present disclosure relates to a notification device, a wireless power supply system, a program, a power transmission device, and a power receiving device.

### [BACKGROUND ART]

A wireless power supply system that supplies power to a vehicle equipped with a power receiving device by transmitting electricity via a power transmission device is known. In the wireless power supply system, when power is supplied, persons near power transmission device may be affected by electromagnetic fields. The wireless power supply system described in Patent Document 1 reduces the impact of electromagnetic fields on living things by suppressing the power supply when living things are detected by sensors such as cameras.

### [PRIOR ART REFERENCES]

### [PATENT DOCUMENT]

[PATENT DOCUMENT 1] JP2012165497A

### [SUMMARY OF INVENTION]

The invention described in Patent Document 1 suppresses the power supply when a living body is detected by a sensor such as a camera. This gives rise to the problem that it excessively suppresses the power supply even in situations where there is no actual risk of the electromagnetic field affecting the living body. In right of this perspective, a technology capable of suppressing the power supply only in appropriate situations is desired.

The present disclosure may be realized in the following embodiments.

According to one aspect of the present disclosure, a notification device for a wireless power supply system is provided. The wireless power supply system includes a power receiving device and at least one power transmission device that transmits power wirelessly to the power receiving device. The notification device includes an output unit notification unit configured to output a power suppressing request signal requesting power suppression during the power transmission by the power transmission device, and a power supply configured to supply power for an operation of the notification unit.

According to this aspect of the notification device, by outputting a power suppressing request signal that requests suppression of the power transmission by the power transmission device during power transmission, when the notification device mounted to a living body is located near the power transmission device, it is possible to request suppression of the power supply, and prevent excessive restriction of the power transmission by power transmission device.

### [BRIEF DESCRIPTION OF DRAWINGS]

The above objectives and other objectives, features, and advantages of the present disclosure will become clearer through the following detailed description with reference to the accompanying drawings. The drawings are as follows:
Fig. 1 is a diagram showing a schematic configuration of a wireless power supply system according to a first embodiment;
Fig. 2 is a diagram showing a circuit configuration of a power transmission device and a power receiving device according to the first embodiment;
Fig. 3 is a flowchart showing a control procedure performed by the wireless power supply system according to the first embodiment,
Fig. 4 is a diagram showing a circuit configuration of a power supply unit according to a second embodiment.

### [DESCRIPTION OF EMBODIMENTS]

### A. First Embodiment:

### A-1. System Configuration:

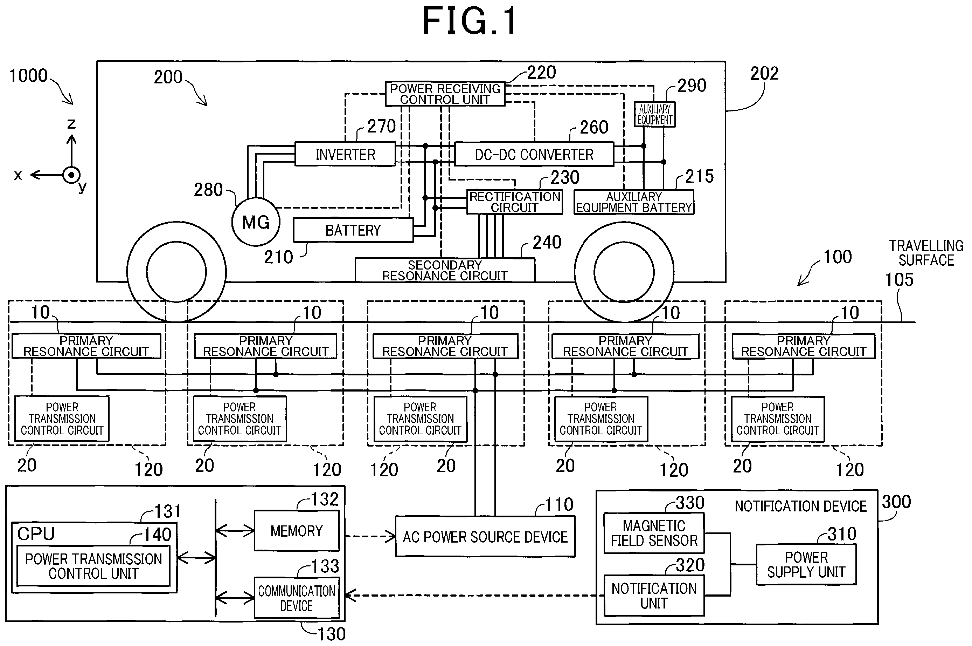

A wireless power supply system 1000 of this embodiment, shown in Figure 1, is provided with a power transmission device 100, a power receiving device 200, and a notification device 300. In this embodiment, the power transmission device 100 is embedded beneath a travelling surface 105. At least a part of the power transmission device 100 may be exposed on the travelling surface 105. The power receiving device 200 is mounted to an electric vehicle 202, which travels on the travelling surface 105. The electric vehicle 202 is an example of a mobile object. In this embodiment, the electric vehicle 202 is an AGV (Automatic Guided Vehicle) traveling in a factory or warehouse. In Figure 1, the wireless power supply system 1000 includes one power transmission device 100 and one power receiving device 200, but it may include a plurality of the multiple power transmission devices 100 and a plurality of the power receiving devices 200.

For illustrative purposes, the notification device 300 is positioned below the travelling surface 105 in Figure 1, but the notification device 300 may be positioned above the travelling surface 105. In this embodiment, the notification device 300 is attached to a work boot of a worker walking on the travelling surface 105 and moves with the worker. The specific configuration of the notification device 300 will be described later.

In the wireless power supply system 1000, the power transmission device 100 supplies power to the power receiving device 200 when the electric vehicle 202 travels on the travelling surface 105. The phrase "when traveling on the travelling surface 105" includes not only when the electric vehicle 202 is moving, but also when the electric vehicle 202 is stopped near fixed equipment such as a transport robot or a conveyor during operations like loading/unloading items. In Figure 1, the x-axis direction indicates a travelling direction of the electric vehicle 202, the y-axis direction indicates a width direction of the electric vehicle 202, and the z-axis direction indicates a vertical upward direction.

The power transmission device 100 is provided with an AC power source device 110, a plurality of power transmission circuit 120, and a control device 130. The AC power source device 110 supplies AC power at a predetermined operating frequency to each power transmission circuit 120. The specific configuration of the AC power source device 110 will be described below.

The plurality of power transmission circuit 120 are installed underground along the x-axis direction of the travelling surface 105. The plurality of power transmission circuit 120 may also be installed in locations other than underground near the travelling surface 105, such as on the side of conveying equipment. The plurality of power transmission circuit 120 are connected in parallel to the AC power source device 110 and supplied AC power from the AC power source device 110. Each of the plurality of power transmission circuit 120 has a primary resonance circuit 10 and a power transmission control circuit 20. The primary resonance circuit 10 receives the AC power from the AC power source device 110 and transmits the AC power wirelessly to a secondary resonance circuit 240, described later. The power transmission control circuit 20 switches a state of the primary resonance circuit 10 between a state where the power transmission by the primary resonance circuit 10 is performed and a state where it is not performed, depending on a positional relationship between the power transmission device 100 and the power receiving device 200. The specific configuration of the primary resonance circuit 10 and the power transmission control circuit 20 will be described below.

The control device 130 is a computer device provided with a CPU 131, a memory 132, and a communication device 133. The CPU 131 functions as a power transmission control unit 140 by executing a program stored in the memory 132.

The power transmission control unit 140 controls the state of the AC power source device 110 between a state where the power supply by the AC power source device 110 is performed and a state where the power supply is stopped. More specifically, the power transmission control unit 140 controls the state of the AC power source device 110 between the state where the power supply by the AC power source device 110 is performed and the state where the power supply is stopped, based on the reception status of a power transmission prohibitory signal output by the notification device 300, which will be described below. The specific processing performed by the power transmission control unit 140 will be described below. In this embodiment, each of control device 130 is placed near each power transmission circuit 120. Therefore, the control device 130 can receive the power transmission prohibitory signal output when the worker carrying the notification device 300 approaches the power transmission circuit 120, enabling the power transmission control unit 140 to perform the control at the necessary timing to control the state of the AC power source device 110 between the state where the power supply by the AC power source device 110 is performed and the state where the power supply is stopped.

The power receiving device 200 is provided with a battery 210, an auxiliary equipment battery 215, a power receiving control unit 220, a rectification circuit 230, the secondary resonance circuit 240, a DC-DC converter 260, an inverter 270, a motor-generator 280, and auxiliary equipment 290. The power receiving device 200 may not be provided with the auxiliary equipment 290. In this case, the power receiving device 200 may not be provided with the auxiliary equipment battery 215 and the DC-DC converter 260. In this embodiment, the secondary resonance circuit 240 may be provided at a position facing the travelling surface 105, for example, on the bottom surface of the electric vehicle 202. When the power transmission circuit 120 is mounted on the side of the fixed equipment, the secondary resonance circuit 240 may be provided on the side of the electric vehicle 202. The specific configuration of the secondary resonance circuit 240 will be described below.

The secondary resonance circuit 240 is connected to the rectification circuit 230. AC power received by the secondary resonance circuit 240 is converted to DC power by the rectification circuit 230. An output terminal of the rectification circuit 230 is connected to the battery 210, a high-voltage terminal of the DC-DC converter 260, and the inverter 270. A low-voltage terminal of the DC-DC converter 260 is connected to the auxiliary equipment battery 215 and the auxiliary equipment 290. The motor-generator 280 is connected to the inverter 270. The DC power output by the rectification circuit 230 may be used for charging the battery 210 or driving the motor-generator 280 via the inverter 270. The DC power output by the rectification circuit 230 and stepped by the DC-DC converter 260 may also be used for charging the auxiliary equipment battery 215 or the driving auxiliary equipment 290.

The battery 210 is a secondary battery that outputs relatively high DC power, for example, a voltage of tens to hundreds of volts, for driving the motor-generator 280. The motor-generator 280 may be, for example, a three-phase AC motor. The motor-generator 280 generates driving force for the operation of the electric vehicle 202. During deceleration of the electric vehicle 202, the motor-generator 280 operates as a generator and regenerates electrical power. The inverter 270 converts the DC power from the battery 210 into three-phase AC power and supplies it to the motor-generator 280 when the motor-generator 280 operates as a motor. The inverter 270 converts three-phase AC power regenerated by the motor-generator 280 into DC power and supplies it to the battery 210 when the motor-generator 280 operates as a generator.

The DC-DC converter 260 converts output voltage of the battery 210 to a voltage lower than the output voltage of the battery 210, for example to 12V, and supplies it to the auxiliary equipment battery 215 and the auxiliary equipment 290. The auxiliary equipment battery 215 is a secondary battery for driving the auxiliary equipment 290. The voltage of the auxiliary equipment battery 215 is lower than that of battery 210. The auxiliary equipment 290 includes various accessories such as cameras, a LiDAR, a lighting device, and other sensors used for operations of the electric vehicle 202. The auxiliary equipment battery 215 may also be used as a power source for the control device 130.

The power receiving control unit 220 controls each part of the electric vehicle 202, including the inverter 270.

The notification device 300 outputs power transmission prohibitory signal. The "power transmission prohibitory signal" is a signal requesting that power transmission device 100 is prohibited from power transmission. In other words, the power transmission prohibitory signal is a signal requesting that the power during transmission by power transmission device 100 be suppressed to zero and is an example of a "power suppressing request signal" in this disclosure.

The notification device 300 is provided with a power supply unit 310, a notification unit 320, and a magnetic field sensor 330. The power supply unit 310 supplies power for the operation of each of the notification unit 320 and the magnetic field sensor 330 to each of notification unit 320 and magnetic field sensor 330. In this embodiment, the power supply unit 310 includes a battery. Since the notification device 300 operates using power supplied by the power supply unit 310, which includes the battery, the complexity and size of the notification device 300 is suppressed.

The magnetic field sensor 330 detects a magnetic field. In this embodiment, the magnetic field sensor 330 has a detection circuit that is configured to undergo resonance within a frequency band including the frequency of the magnetic field generated during power transmission by the power transmission device 100. When power transmission by the power transmission device 100 is performed and a magnetic field is generated, the detection circuit undergoes resonance, its impedance decreases, and current flows through the detection circuit. In this embodiment, the magnetic field sensor 330 detects a magnetic field by detecting this current. When the magnetic field sensor 330 detects a magnetic field, it outputs a detection signal to the notification unit 320. The magnetic field sensor 330 is not limited to this configuration and may be any known type of magnetic field sensor.

The notification unit 320 can switch its state between a state where it outputs power transmission prohibitory signal (on state) and a state where it does not output power transmission prohibitory signal (off state). In this embodiment, the notification unit 320 outputs the power transmission prohibitory signal when it receives the detection signal from the magnetic field sensor 330. In this embodiment, the transmission distance of the power transmission prohibitory signal is about 2 meters. In the on state, the notification unit 320 outputs the power transmission prohibitory signal at a predetermined intensity. This predetermined intensity is such that the communication device 133 of the control device 130, located within 2 meters form the notification unit 320, can receive it, while a communication device 133 of the control device 130 located more than 2meters from the notification unit 320 cannot receive it. As a result, when the wireless power supply system 1000 includes multiple power transmission devices 100, the notification unit 320 can limit the power transmission devices 100 that stop power transmission to those located within 2 meters form the notification device 300. This suppresses excessive restriction of power transmission opportunities by the power transmission device 100. On the other hand, in the off state, the notification unit 320 does not output the power transmission prohibitory signal. Therefore, compared to a configuration that constantly outputs the power transmission prohibitory signal, an increase in power consumption in the notification device 300 is suppressed.

### A-2. Circuit Configuration:

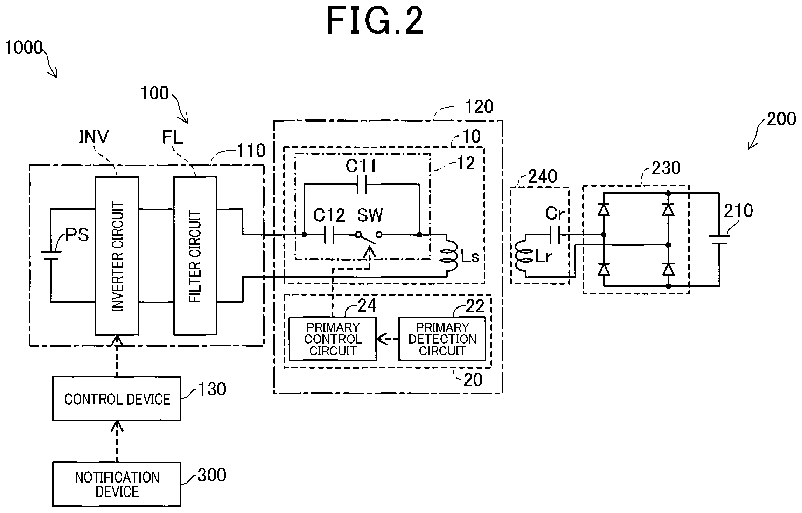

The explanation of a circuit configuration of the power transmission device 100 is given. As shown in Figure 2, the AC power source device 110 includes a power supply PS, an inverter circuit INV, and a filter circuit FL. In this embodiment, the power supply PS is a DC power source that supplies DC power to the inverter circuit INV. The inverter circuit INV converts the supplied DC power into high-frequency AC power. A high-frequency filter 114 extracts and passes AC power having a predetermined operating frequency from the supplied high-frequency AC power. In this embodiment, the control device 130 controls the state of the AC power source device 110 between a state where the power supply by the AC power source device 110 is performed and a state where the power supply is stopped by controlling the inverter circuit INV. The power supply PS may be an AC power source supplying AC power instead of the DC power source. In that case, an AC-DC converter circuit is provided between the power supply PS and the inverter circuit INV. The AC-DC converter circuit converts the AC power supplied from the power supply PS into DC power and supplies it to the inverter circuit INV.

In this embodiment, as described above, the power transmission circuit 120 includes the primary resonance circuit 10 and the power transmission control circuit 20. In Figure 2, only one power transmission circuit 120 is shown among the multiple power transmission circuits 120 connected in parallel to the AC power source device 110; the other power transmission circuit 120 are omitted from the illustration.

The primary resonance circuit 10 includes a primary coil Ls and an impedance variable element 12. The impedance variable element 12 is connected in series with the primary coil Ls between the primary coil Ls and the AC power source device 110. The impedance variable element 12 includes two capacitors C11 and C12, and a switch SW. The capacitor C11 is connected in series with the primary coil Ls. The capacitor C12 and the switch SW are connected in series. The series-connected capacitor C12 and the switch SW are connected in parallel with the capacitor C11. The switch SW may be a switch that switches mechanical contacts, such as a relay, in response to an external command, or it may be a switch using a semiconductor device, such as a MOS-FET or an analog switch.

The impedance variable element 12 changes its capacitance by switching the switch SW on or off. When the switch SW is on, the capacitor C12 is connected to the primary coil Ls. Then, the capacitance of the impedance variable element 12 is equal to the sum of the capacitance of the capacitor C11 and the capacitance of the capacitor C12. When the switch SW is off, the capacitor C12 disconnects from primary coil Ls. Then, the capacitance of impedance variable element 12 is equal to the capacitance of capacitor C11. Thus, due to this change in the capacitance of the impedance variable element 12, the impedance of the primary resonance circuit 10 when switch SW is on decreases compared to when switch SW is off. The resonance state of the primary resonance circuit 10 also changes with the change in its impedance. In this embodiment, when the switch SW is on, the primary resonance circuit 10 becomes a resonant state at the operating frequency and a power transmission state. On the other hand, when the switch SW is off, the primary resonance circuit 10 becomes a non-resonant state at the operating frequency and a standby state.

The power transmission control circuit 20 includes a primary detection circuit 22 and a primary control circuit 24. The primary detection circuit 22 includes an unillustrated flux sensor that detects magnitude of magnetic flux linked to the primary coil Ls, and an unillustrated current sensor that detects magnitude of current flowing through the primary coil Ls. In this embodiment, the magnetic flux sensor detects magnitude of magnetic flux using the change in voltage between terminals of a detection coil magnetically coupled to the primary coil Ls. The current sensor detects magnitude of current using the change in voltage between terminals of the capacitor C11. The primary detection circuit 22 outputs a signal indicating the detected magnetic flux magnitude and a signal indicating the detected current magnitude to the primary control circuit 24.

The primary control circuit 24 drives the switch SW based on the signals output from the primary detection circuit 22 and switches the switch SW on or off. More specifically, the primary control circuit 24 turns the switch SW on when the magnitude of the magnetic flux indicated by the signal output by the primary detection circuit 22 is equal to or greater than a predetermined threshold, switching the primary resonance circuit 10 to the power transmission state. The primary control circuit 24 turns switch SW off when the magnitude of the current indicated by the signal output by the primary detection circuit 22 is equal to or greater than a predetermined threshold, switching the primary resonance circuit 10 to the standby state. In this embodiment, the switch SW is configured as a normally open type of switch, and the primary resonance circuit 10 maintains the standby state under normal conditions, specifically when the magnitude of the magnetic flux is below the predetermined threshold.

Each of the magnitude of the current and the magnitude of the magnetic flux varies according to the degree of magnetic coupling between the power transmission circuit 120 and the power receiving device 200. In the non-resonant state, the magnitude of the magnetic flux increases as the power transmission circuit 120 and the power receiving device 200 approach each other. Furthermore, in the resonant state, the magnitude of the current decreases as the power transmission circuit 120 and the power receiving device 200 approach each other. The predetermined threshold for the magnitude of the magnetic flux and the magnitude of the current are identified and set beforehand through simulations, etc., as the values when the power receiving device 200 enters a power transmission area. The "power transmission area" refers to the predefined region for each power transmission circuit 120 where power transmission to the power receiving device 200 is performed. That is, the primary control circuit 24 controls switching of the switch SW to initiate power transmission when the power receiving device 200 enters the power transmission area. This allows the power supply to the power transmission circuit 120 where the power receiving device 200 is not located within the power transmission area to be suppressed, thereby reducing power consumption in the wireless power supply system 1000.

Explanation of a circuit configuration of the power receiving device 200 will now be given. In Figure 2, the circuit configuration of the power receiving device 200 related specifically to the power supply to the battery 210 is shown, while other parts are omitted.

The secondary resonance circuit 240 includes a secondary coil Lr and a secondary capacitor Cr connected in series. The secondary resonance circuit 240 is configured to undergo resonance at the operating frequency of the power transmission device 100. In the resonant state, the secondary resonance circuit 240 receives the AC power transmitted from the power transmission device 100 and supplies the received AC power to the rectification circuit 230.

In this embodiment, the rectification circuit 230 is a diode bridge. The rectification circuit 230 rectifies the AC power supplied from the secondary resonance circuit 240 and supplies the rectified DC power to the battery 210. The battery 210 is charged by receipt the DC power from the rectification circuit 230.

### A-3. Control in the wireless power supply system 1000:

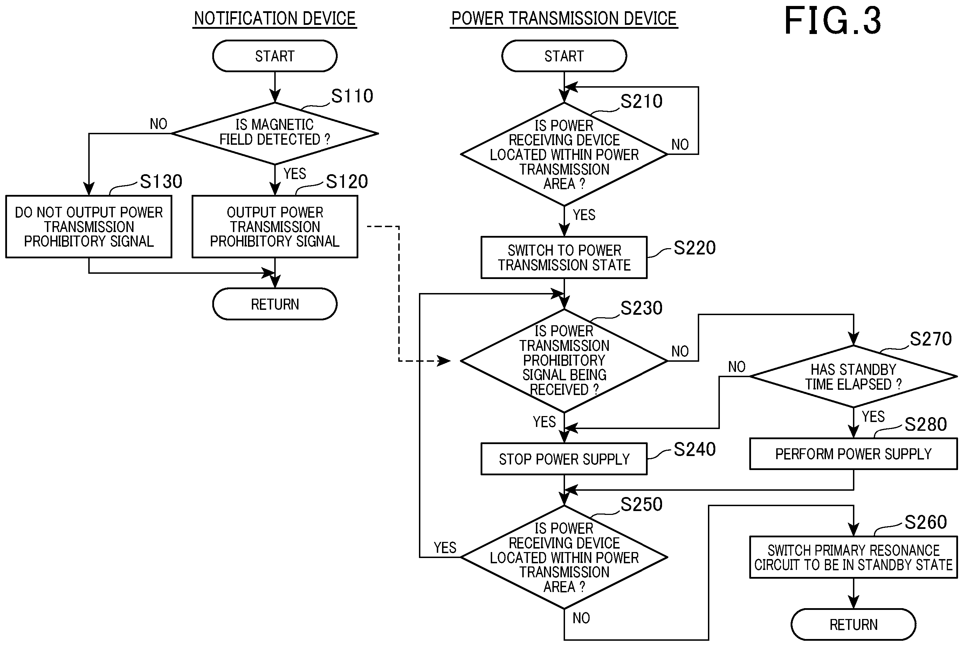

In this embodiment, during operation of the wireless power supply system 1000, the process shown in Figure 3 is repeatedly performed. Steps S110, S120, and S130 shown on the left side of Figure 3 are processes performed by the notification device 300. Steps S210 to S280 shown on the right side of Figure 3 are processes performed by the power transmission device 100.

Explanation of control in the notification device 300 will now be given. In a case that a magnetic field is detected by the magnetic field sensor 330 (Step S110: Yes), in Step S120, the notification unit 320 outputs the power transmission prohibitory signal. On the other hand, in a case that a magnetic field is not detected (Step S110: No), in Step S130, the notification unit 320 does not output the power transmission prohibitory signal. The notification device 300 repeatedly performs the above processes while the notification device 300 is operating.

Explanation of control in the power transmission device 100 will now be given. In Fig. 3, it is assumed that the primary resonance circuit 10 is in a standby state at start. In step S210, the primary control circuit 24 determines whether the power receiving device 200 is located within the power transmission area. In this embodiment, the primary control circuit 24 determines whether the power receiving device 200 is located within the power transmission area by determining whether the magnitude of the magnetic flux indicated by the signal output by the primary detection circuit 22 is equal to or greater than the predetermined threshold.

In a case that it is determined that the power receiving device 200 is located within the power transmission area (Step S210: Yes), in other words, in a case that it is determined that the magnitude of the magnetic flux indicated by the signal output from the primary detection circuit 22 is equal to or greater than the predetermined threshold, then in Step S220, the primary detection circuit 22 controls the switch SW to switch the primary resonance circuit 10 into the power transmission state. On the other hand, in a case that it is determined that the power receiving device 200 is not located within the power transmission area (Step S210: No), in other words, in a case that it is determined that the magnitude of the magnetic flux indicated by the signal output from the primary detection circuit 22 is below the predetermined threshold, the primary detection circuit 22 maintains the primary resonance circuit 10 to be in the standby state.

In step S230, the power transmission control unit 140 determines whether the power transmission device 100 is receiving the power transmission prohibitory signal. In a case that it is determined that the power transmission device 100 is receiving the power transmission prohibitory signal (Step S230: Yes), the power transmission control unit 140 stops the power supply from the AC power source device 110 to the power transmission circuit 120. In a case that the power transmission prohibitory signal is received, it is considered that the worker carrying the notification device 300 is located near the power transmission device 100. Continuing power transmission in such a situation risks the magnetic field generated during transmission affecting the worker. In this embodiment, when it is determined that the power transmission device 100 is receiving the power transmission prohibitory signal, the power supply from the AC power source device 110 to the power transmission circuit 120 is stopped, thereby suppressing the magnetic field generated during power transmission from affecting the worker.

On the other hand, in a case that the power transmission device 100 is not receiving the power transmission prohibitory signal (Step S230: No), in Step S270, the power transmission control unit 140 determines whether a predetermined standby time has elapsed from the timing when the power transmission device 100 stopped to receive the power transmission prohibitory signal. The standby time may be set to any length capable of suppressing the occurrence of the hunting phenomenon described later. In a case that it is determined that the standby time has not elapsed (Step S270: No), the power transmission control unit 140 proceeds to Step S240, that is, continues to suspend the power supply to the power transmission circuit 120. On the other hand, in a case that it is determined that the standby time has elapsed (Step S270: Yes), in Step S280, the power transmission control unit 140 causes the AC power source device 110 to perform the power supply to the power transmission circuit 120.

Since the power supply is stopped when the power transmission prohibitory signal is received and the magnetic field ceases, the notification device 300 stops outputting the power transmission prohibitory signal. Here, when the power supply is immediately restarted after the power transmission prohibitory signal reception stops, it is considered that the worker carrying the notification device 300 is still located near the r transmission device 100. Therefore, when the power supply is restarted immediately, a magnetic field is generated again, causing the power transmission prohibitory signal to be output, and the power supply would stop upon receiving the power transmission prohibitory signal. In other words, when the power supply is restarted immediately after the power transmission prohibitory signal reception stops, there is a risk of a hunting phenomenon occurring, where the power supply restarts and stops repeatedly within a short time. In this embodiment, the power supply is restarted after the predetermined standby time following the cessation of the power transmission prohibitory signal reception, thereby suppressing the occurrence of such a hunting phenomenon.

In step S250, the primary control circuit 24 determines whether the power receiving device 200 is located within the power transmission area. In this embodiment, the primary control circuit 24 determines whether the power receiving device 200 is located within the power transmission area by determining whether the magnitude of the current indicated by the signal output by the primary detection circuit 22 is equal to or greater than the predetermined threshold.

In a case that it is determined that the power receiving device 200 is located within the power transmission area (Step S250: Yes), in other words, in a case that it is determined that the magnitude of the current indicated by the signal output by the primary detection circuit 22 is below the predetermined threshold, the power transmission control unit 140 performs the processing of Step S230 again. On the other hand, in a case that it is determined that the power receiving device 200 is not located within the power transmission area (Step S250: No), in other words, in a case that it is determined that the magnitude of the current indicated by the signal output from primary detection circuit 22 is equal to or greater than the predetermined threshold, then in Step S260, the primary detection circuit 22 controls the switch SW to switch the primary resonance circuit 10 to be in the standby state. The notification device 300 repeatedly performs the above control while notification device 300 is operating.

According to the wireless power supply system 1000 of the first embodiment described above, the notification device 300 outputs the power transmission prohibitory signal that requests suppression of the power during the power transmission by the power transmission device 100. Therefore, when the notification device 300 installed to the living body is located near the power transmission device 100, it is possible to request suppression of the power only during the power transmission by the power transmission device 100, thereby preventing the power transmission by the power transmission device 100 from being excessively restricted.

Since the transmission distance of power transmission prohibitory signal is equal to or less than 2 meters, only a power transmission device 100 located within 2 meters range from the notification device 300 stops the power transmission. As a result, it is possible to suppress excessive restriction of the power transmission by the power transmission device 100.

Since notification device 300 includes the magnetic field sensor 330 and the notification unit 320 configured to output the power transmission prohibitory signal when magnetic field sensor 330 detects a magnetic field, the power transmission cessation is requested only when an actual magnetic field exists and workers risk exposure to it. This further suppresses excessive restriction of the power transmission by the power transmission device 100. Compared to a configuration that constantly outputs power transmission prohibitory signal, this suppresses an increase in power consumption in the notification device 300.

The magnetic field sensor 330 includes the detection circuit that undergo resonance within the frequency band including the magnetic field frequency generated during the power transmission by the power transmission device 100. This enables detection of minute magnetic fields and precise detection of magnetic field generation.

### B. Second Embodiment:

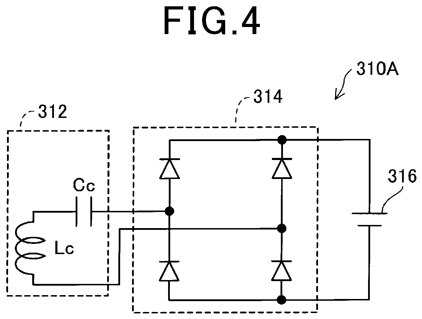

The notification device 300 in the wireless power supply system 1000 according to a second embodiment differs from the notification device 300 in the wireless power supply system 1000 according to the first embodiment in that it has a power supply unit 310A shown in Figure 4 instead of the power supply unit 310. The device configuration of the wireless power supply system 1000 in the second embodiment and the other processing steps in the wireless power supply system 1000 are the same as those of the wireless power supply system 1000 in the first embodiment. Therefore, the same reference symbols are used for the same configurations and steps, and their detailed descriptions are omitted.

As shown in Figure 4, the power supply unit 310A of this embodiment includes a resonant circuit 312, a rectification circuit 314, and a battery 316. The resonant circuit 312 includes a coil Lc and a capacitor Cc connected in series. The resonant circuit 312 is configured to undergo resonance at the operating frequency of the power transmission device 100. In the resonant state, the resonant circuit 312 supplies the alternating current power generated due to the magnetic field energy produced during the power transmission by the power transmission device 100 to the rectification circuit 314.

The rectification circuit 314 may be a diode bridge. The rectification circuit 314 rectifies the AC power supplied by the resonant circuit 312 and supplies the rectified DC power to the battery 316. The battery 316 is charged by the receipt DC power from the rectification circuit 314. Thus, in this embodiment, the battery 316 is charged using energy from the magnetic field generated during the power transmission by the power transmission device 100. The battery 316 is an example of a "power storage unit" in this disclosure. The power supply unit 310A may have a capacitor as the power storage unit instead of the battery 316.

According to the wireless power supply system 1000 according to the second embodiment described above, since the power supply unit 310 has the battery 316 that is charged using energy from the magnetic field generated during the power transmission by the power transmission device 100, it is possible to suppress the inability to output the power transmission prohibitory signal due to insufficient remaining capacity of a drive battery. Furthermore, since the drive battery is not required, it can suppress the enlargement of the notification device 300.

### C. Other Embodiments:

(C1) In the above embodiments, the notification device 300 is attached to the worker's work boots, but the present disclosure is not limited thereto. The notification device 300 may be mounted not only on work boots but also on any location carried by the worker, such as a hat. The preferred mounting position for the notification device 300 is one where the distance to the power transmission device 100 is minimized. This configuration also achieves the same effects as the above embodiment.

The notification device 300 may be used not only for worker protection but also for protecting precision machinery and other equipment susceptible to magnetic field effects. More specifically, the notification device 300 may be attached to a cart used for transporting precision machinery. In this configuration, the power supply to the cart equipped with the notification device 300 is stopped when it passes near the power transmission device 100, thereby suppressing magnetic field effects on the precision machinery and other susceptible equipment.

(C2) In the above embodiments, the power transmission control unit 140 stops power supply upon receiving the power transmission prohibitory signal, but the present disclosure is not limited thereto. The notification device 300 may output a power suppressing request signal instead of power transmission prohibitory signal, requesting that power transmission device 100 suppress the power during transmission. Upon receiving the power suppressing request signal, the power transmission control unit 140 may perform control that suppresses the transmission power below normal levels without stopping power supply. In such a form, the power transmission control unit 140 controls the power during transmission, for example, by controlling the duty ratio of inverter circuit INV. This form also suppresses the strength of the magnetic field generated during transmission compared to a normal operation by suppressing the transmission power, thereby suppressing the magnetic field generated during transmission from affecting workers. Suppression of the transmission power may be achieved by changing the drive frequency of inverter circuit INV. In this form, the power transmission control unit 140 changes the drive frequency of inverter circuit INV within the operating range of the resonant circuit 312 possessed by the magnetic field sensor 330 or the notification device 300 of the second embodiment.

(C3) In the above embodiments, stopping power transmission by the power transmission device 100 is achieved by the power transmission control unit 140 controlling the inverter circuit INV in the AC power source device 110, but the present disclosure is not limited thereto. The power supply stop may also be achieved by the primary control circuit 24 receiving the power transmission prohibitory signal and then controlling the switch SW to switch the power transmission circuit 120 to the standby state. The power supply stop may also be achieved by the primary control circuit 24, upon receiving the power transmission prohibitory signal, controlling the inverter circuit INV of the AC power source device 110. Such forms also achieve the same effects as the above embodiment. Furthermore, since the power supply performance and suspension is controlled for each power transmission circuit 120, only the power transmission circuit 120 near the notification device 300 equipped with the worker suspends power transmission, while the other power transmission circuit 120 continues power supply. That is, the number of power transmission circuits 120 that stop power transmission for worker protection is suppressed, thereby preventing excessive restriction of power transmission execution opportunities by power transmission device 100.

(C4) In the above embodiments, the power transmission device 100 provides one AC power source device 110 for multiple power transmission circuits 120, but the present disclosure is not limited thereto. The power transmission device 100 may provide an AC power source device 110 and a control device 130 for each power transmission circuit 120. Among the AC power source devices 110, the power supply PS may be shared among multiple power transmission circuits 120, while the inverter circuit INV, filter circuit FL, and control device 130 may be provided for each power transmission circuit 120. This configuration also achieves the same effects as the above embodiments. Furthermore, since each power transmission circuit 120 is equipped with the inverter circuit INV and the control device 130, the power supply performance and suspension is controlled for each power transmission circuit 120. Consequently, among the multiple power transmission circuits 120, only the power transmission circuit 120 near the notification device 300 equipped with the worker terminates power transmission, while the other power transmission circuit 120 continues supplying power. In other words, the number of power transmission circuit 120 units that stop the power transmission for worker protection is limited, thereby preventing excessive restrictions on the power transmission performance by the power transmission device 100.

(C5) In the above embodiments, the power transmission control unit 140 performs step S270 in the control shown in Figure 3, but the present disclosure is not limited thereto. The power transmission control unit 140 may omit performing step S270. That is, the power transmission control unit 140 may immediately restart the power supply when the power transmission prohibitory signal is no longer received. According to this form, since the determination in step S270 is not performed, the complexity of the control shown in Figure 3 is suppressed.

(C6) In the above embodiments, the notification device 300 is provided with the magnetic field sensor 330, but the present disclosure is not limited thereto. The notification device 300 need not be provided with the magnetic field sensor 330. The notification device 300 may constantly output the suppression stop signal. In this form, the power transmission control unit 140 need not perform step S110 shown in Figure 3, thereby suppressing the complexity of the control shown in Figure 3.

(C7) In the above embodiments, the transmission distance of the power transmission prohibitory signal is 2 meters, but the present disclosure is not limited thereto. The transmission distance of power transmission prohibitory signal may be arbitrarily determined according to a mutual distance between adjacent ones of the multiple power transmission devices 100. More specifically, for example, when the power transmission devices 100 are arranged at 10 meters intervals, the transmission distance of the power transmission prohibitory signal may be about 5 meters. The transmission distance of the power transmission prohibitory signal may also be determined based on the magnitude of the power supplied by the power transmission device 100 during power transmission. This configuration also achieves the same effect as the above embodiment.

(C8) In the above embodiments, the notification unit 320 does not output the power transmission prohibitory signal in the OFF state, but the present disclosure is not limited thereto. The notification unit 320 may output a power transmission prohibitory signal of an intensity not received by communication device 133 of control device 130 in the OFF state. This configuration also achieves the same effect as the above embodiment.

The notification device 300 and control device 130 described herein, and the method thereof, may be implemented by a dedicated computer provided by configuring a processor and memory programmed to execute one or more functions embodied by the program. Alternatively, the notification device 300 and control device 130 described herein, and the method thereof, may be implemented by a dedicated computer provided by configuring a processor by one or more dedicated hardware logic circuits. Alternatively, the notification device 300 and control device 130 described herein, and the method thereof, may be implemented by one or more dedicated computers configured by a combination of a processor and memory programmed to execute one or more functions, and one or more hardware logic circuits. The program may be stored on a computer-readable, non-transitory tangible medium as instructions executable by a computer.

The present disclosure is not limited to the embodiments described above and may be realized in various configurations within the scope of the invention without departing from its spirit. For example, the technical features in each embodiment corresponding to the technical features described in the Summary of the Invention may be appropriately substituted or combined to solve some or all the above problems or to achieve some or all the above effects. If a technical feature is not described herein as essential, it may be appropriately omitted.

### (Aspect 1)

A notification device (300) for a wireless power supply system (1000), the wireless power supply system comprising a power receiving device (200) and at least one power transmission device (100) that transmits power wirelessly to the power receiving device,
wherein the notification device comprises:
an output unit notification unit (320) configured to output a power suppressing request signal requesting power suppression during the power transmission by the power transmission device; and
a power supply (310, 310A) configured to supply power for an operation of the notification unit.

### (Aspect 2)

The notification device according to aspect 1, wherein
the at least one power transmission device includes multiple power transmission devices, and
the transmission distance of the power suppressing request signal is a predetermined distance based on a mutual distance between adjacent ones of the multiple power transmission devices.

### (Aspect 3)

The notification device according to aspect 2, wherein
the transmission distance of the power suppressing request signal is equal to or less than 2 meters.

### (Aspect 4)

The notification device according to aspect 1, further comprising a magnetic field sensor (330) configured to detect a magnetic field,
wherein the notification unit outputs the power suppressing request signal in a case that a magnetic field is detected by the magnetic field sensor.

### (Aspect 5)

The notification device according to aspect 4, wherein
the magnetic field sensor comprises a detection circuit that undergo resonances within a frequency band including a frequency of the magnetic field generated during the power transmission by the power transmission device.

### (Aspect 6)

The notification device according to aspect 1, wherein
the power supply unit has a power storage unit (316) configured to be charged using an energy of the magnetic field generated during the power transmission by the power transmission device.

### (Aspect 7)

A wireless power supply system comprising:
a power receiving device;
at least one power transmission device; and
the notification device according to any one of aspects 1 to 6, wherein,
each of the at least one power transmission device, in a case that the power suppressing request signal is received, suppresses the transmitted power compared to before the power suppressing request signal is received.

### (Aspect 8)

A program for controlling the power transmission device included in a wireless power supply system,
wherein the wireless power supply system comprises a power receiving device configured to receive power wirelessly from the power transmission device, and the notification device according to any one of claims 1 to 6, and
the program is configured to be executed by a computer included in the power transmission device to cause the power transmission device to, in a case that the power suppressing request signal is received, suppress the transmitted power compared to before the power suppressing request signal is received.

### (Aspect 9)

A power transmission device configured to supply power wirelessly to a power receiving device, wherein
the power transmission device is configured to, in a case that the power suppressing request signal output by the notification device according to any one of aspects 1 to 6 is received, suppress the transmitted power compared to before the power suppressing request signal is received.

### (Aspect 10)

A power receiving device configured to receive power wirelessly from a power transmission device, wherein
the power transmission device is configured to, in a case that the power suppressing request signal output by the notification device according to any one of aspects 1 to 6 is received, suppress the transmitted power compared to before the power suppressing request signal is received.

## Claims

1. A notification device (300) for a wireless power supply system (1000), the wireless power supply system comprising a power receiving device (200) and at least one power transmission device (100) that transmits power wirelessly to the power receiving device,
wherein the notification device comprises:
an output unit notification unit (320) configured to output a power suppressing request signal requesting power suppression during the power transmission by the power transmission device; and
a power supply (310, 310A) configured to supply power for an operation of the notification unit.

2. The notification device according to claim 1, wherein
the at least one power transmission device includes multiple power transmission devices, and
the transmission distance of the power suppressing request signal is a predetermined distance based on a mutual distance between adjacent ones of the multiple power transmission devices.

3. The notification device according to claim 2, wherein
the transmission distance of the power suppressing request signal is equal to or less than 2 meters.

4. The notification device according to claim 1, further comprising a magnetic field sensor (330) configured to detect a magnetic field,
wherein the notification unit outputs the power suppressing request signal in a case that a magnetic field is detected by the magnetic field sensor.

5. The notification device according to claim 4, wherein
the magnetic field sensor comprises a detection circuit that undergo resonances within a frequency band including a frequency of the magnetic field generated during the power transmission by the power transmission device.

6. The notification device according to claim 1, wherein
the power supply unit has a power storage unit (316) configured to be charged using an energy of the magnetic field generated during the power transmission by the power transmission device.

7. A wireless power supply system comprising:
a power receiving device;
at least one power transmission device; and
the notification device according to any one of claims 1 to 6, wherein,
each of the at least one power transmission device, in a case that the power suppressing request signal is received, suppresses the transmitted power compared to before the power suppressing request signal is received.

8. A program for controlling the power transmission device included in a wireless power supply system,
wherein the wireless power supply system comprises a power receiving device configured to receive power wirelessly from the power transmission device, and the notification device according to any one of claims 1 to 6, and
the program is configured to be executed by a computer included in the power transmission device to cause the power transmission device to, in a case that the power suppressing request signal is received, suppress the transmitted power compared to before the power suppressing request signal is received.

9. A power transmission device configured to supply power wirelessly to a power receiving device, wherein
the power transmission device is configured to, in a case that the power suppressing request signal output by the notification device according to any one of claims 1 to 6 is received, suppress the transmitted power compared to before the power suppressing request signal is received.

10. A power receiving device configured to receive power wirelessly from a power transmission device, wherein
the power transmission device is configured to, in a case that the power suppressing request signal output by the notification device according to any one of claims 1 to 6 is received, suppress the transmitted power compared to before the power suppressing request signal is received.
